(19) **Europäisches Patentamt / European Patent Office / Office européen des brevets**

(11) **EP 1 392 798 B1**

(12) **EUROPEAN PATENT SPECIFICATION**

(45) Date of publication and mention
of the grant of the patent:
**09.05.2007 Bulletin 2007/19**

(21) Application number: **02754693.6**

(22) Date of filing: **10.06.2002**

(51) Int Cl.:
**C10G 65/02** *(2006.01)*    **C10G 49/04** *(2006.01)*
**B01J 35/10** *(2006.01)*    **C10G 65/04** *(2006.01)*

(86) International application number:
**PCT/EP2002/006664**

(87) International publication number:
**WO 2002/100985 (19.12.2002 Gazette 2002/51)**

(54) **TWO-STAGE HYDROPROCESSING PROCESS**

ZWEISTUFIGES KOHLENWASSERSTOFFUMWANDLUNGSVERFAHREN

PROCÉDÉ D'HYDROCRAQUAGE EN DEUX ÉTAPES

(84) Designated Contracting States:
**FI IT**

(30) Priority: **08.06.2001 JP 2001174072**

(43) Date of publication of application:
**03.03.2004 Bulletin 2004/10**

(73) Proprietor: **Nippon Ketjen Co., Ltd**
**Minato-ku,**
**Tokyo 105-6791 (JP)**

(72) Inventors:
• **ABE, Satoshi**
**Saijo City, Ehime Pref. 793-0001 (JP)**

• **FUJITA, Katsuhisa**
**Niihama-shi,**
**Ehime pref. 792-0002 (JP)**

(74) Representative: **Derks, Wilbert et al**
**Howrey LLP**
**Rembrandt Tower**
**Amstelplein 1, 31st Floor**
**1096 HA Amsterdam (NL)**

(56) References cited:
**EP-A- 0 235 411**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a method for hydroprocessing a heavy hydrocarbon oil, in particular a method in which a combination of two catalysts is used to obtain advantageous effects in the hydroprocessing of heavy hydrocarbon oils.

More particularly, the present invention relates to a process suitable for the hydroprocessing of heavy hydrocarbon oils containing a large amount of impurities such as sulfur, metals, and asphaltene to effect hydrodesulfurisation (HDS), hydrodemetallisation (HDM), asphaltene reduction (HDAsp) and/or conversion into lighter products, while limiting the amount of sediment produced. The feed may also contain other contaminants such as Conradson carbon residue (CCR) and nitrogen, and carbon residue reduction (HDCCR) and hydrodenitrification (HDN) may also be desired processes.

Hydrocarbon oils containing 50 wt.% or more of components with a boiling point of 538°C or higher are called heavy hydrocarbon oils. These include atmospheric residue (AR) and vacuum residue (VR), which are produced in petroleum refining. It is desired to remove impurities such as sulfur from these heavy hydrocarbon oils by hydroprocessing, and to convert them into lighter oils, which have a higher economic value.

The hydroprocessing of heavy hydrocarbon oils is done in ebullating bed operation or in fixed bed operation. For ebullating bed operation, various catalysts have been proposed. Generally, these catalysts are capable of efficiently removing sulfur, Conradson carbon residue (CCR), various metals, nitrogen and/or asphaltenes. However, it was found that the decomposition of asphaltenes, an aggregate of condensed aromatic compounds which is in good balance with the rest of the feedstock, is generally accompanied by the formation of sediment and sludge. Sediment can be determined by the Shell hot filtration solid test (SHFST). (see Van Kerknoort et al., *J. Inst. Pet.*, 37, pp. 596-604 (1951)). Its ordinary content is said to be about 0.19 to 1 wt.% in product with a boiling point of 340°C or higher collected from the bottom of a flash drum.

Sediment formed during hydroprocessing may settle and deposit in such apparatuses as heat exchangers and reactors, and because it threatens to close off the passage, it can seriously hamper the operation of these apparatuses. Especially in the hydroprocessing of heavy hydrocarbon feeds containing large amounts of vacuum residue, sediment formation is an important factor, and there is therefore need for a process for effecting efficient contaminant removal in combination with low sediment formation and high conversion.

Japanese patent No. 765055 discloses a process for hydroprocessing a heavy hydrocarbon oil containing sulfur impurities and metallic impurities at least in two stages. In the first stage a catalyst containing 0.1 to 5 wt.% of metal oxide was used to effect hydrodemetallisation and hydrocracking. In the second stage, a catalyst containing 7 to 30 wt.% of a metal oxide was used to effect hydrodesulfurisation. However, due to, among other features, the high metals content of the second catalyst, asphaltene conversion in this process is not adequate.

Japanese patent No. 8325580 A discloses a catalytic hydroconversion method for a heavy feedstock. In the first stage a catalyst with a carrier material selected from alumina, silica, and a combination thereof which comprises 2 to 25 wt.% of oxides of active metals selected from cadmium, chromium, cobalt, iron, molybdenum, nickel, tin, tungsten or a combination thereof, is applied at a reaction temperature of 438 to 468°C, a hydrogen partial pressure of 105 to 245 kg/cm$^2$, and a volume hourly space velocity of 0.3 to 1.0 h-1. In the second stage a similar catalyst is used at a reaction temperature of 371 to 427°C, a hydrogen partial pressure of 105 to 245 kg/cm$^2$, and a space velocity of 0.1 to 0.8 h-1. The first stage is operated at a higher temperature and a lower catalytic activity than the second stage to improve hydroconversion. However, it appears that the high temperature applied in the first stage leads to thermal condensation of asphaltene on the one hand and, on the other, the petroleum resin fractions produced with the thermal cracking of oil are unstable. This can lead to undesired cohesion and precipitation of asphaltene and coke formation in the second stage.

Japanese patent publication 653875 describes a multistage catalytic method for the high conversion of a heavy hydrocarbon liquid feedstock. In the first stage, a fixed bed or ebullated bed reactor is operated at a reaction temperature of 415 to 455°C, a hydrogen partial pressure of 70 to 211 kg/cm$^2$, and a space velocity of 0.2 to 2.0 h-1. In the second stage, an ebullated bed reactor is operated under similar conditions. The catalyst used in the above method comprises a carrier material selected from alumina, silica, and a combination thereof, and the oxide of an active metal selected from cadmium, chromium, cobalt, iron, molybdenum, nickel, tin, tungsten, and mixtures thereof. In this reference, vacuum bottoms are recirculated to achieve a high cracking rate, but the problem of asphaltene cohesion accompanying the high cracking rate operation is not solved.

US 5,322,829 describes a two-stage ebullating bed operation wherein the first stage catalyst may comprise 0.1-5 wt.% of nickel, calculated as oxide, and 1-15 wt.% of molybdenum, calculated as oxide, the catalyst having a surface area of at least 150 m$^2$/g and a total pore volume of 0.8-1.4 ml/g. The second stage catalyst is not described in detail. It appears that this process is insufficient in the removal of metals and asphaltene, and shows high sediment formation.

European Patent Publication No. EP0235411 A1 (Union Oil of California) describes the hydropocessing of hydrocarbon oils utilizing a catalyst which contains nickel and tungsten active metal components on a porous support material and which is characterized by a narrow pore size distribution, with essentially all pores being of diameter greater than about 100 angstroms, with less than about 10 percent of the total pore volume being in pores of diameter greater than 300 angstroms, and with at least about 60 percent of the total pore volume being in pores of diameter from about 180 to about 240 angstroms. The catalyst is described as being useful for promoting the conversion of asphaltenes contained in hydrocarbon oils but when positioned in the second reaction zone of a multiple- stage hydrodesulfurization process wherein further demetallization catalysts are employed in a plurality of upstream reaction zones.

US 4,657,664 describes a multi-stage ebullating bed process for the conversion of heavy hydrocarbon feeds, wherein the first stage catalyst contains 8-8 wt.% of Group VI metal oxide. The second catalyst has a high surface area the main part of which is present in pores with a low diameter. It appears that this catalyst system does not give sufficient activity and selectivity in the hydroprocessing of heavy hydrocarbon feeds.

In summary, the processes of the prior art are inadequate in inhibiting sediment formation in the hydroprocessing of heavy oil to effect hydrodesulfurisation and conversion.

The object of this invention is to provide an effective process for the hydroprocessing of a heavy hydrocarbon oil containing a large amount of impurities such as sulfur, Conradson carbon residue, metals, nitrogen, and asphaltene, for adequately removing the impurities. In addition to efficient contaminant removal, the process should show low sediment formation, high asphaltene removal, and high conversion.

The inventors, having studied intensively to solve the above problem, have found a catalytic hydroprocessing method for a heavy oil based on two-stage catalytic cracking, in which both catalysts meet specific requirements as to metals content and pore size distribution. The catalyst used in the first stage is specifically designed to decrease the impurities in the heavy hydrocarbon oil. In particular, it achieves efficient asphaltene removal in combination with hydrodemetallisation.

The second stage catalyst is tailored to effect advanced desulfurisation and hydrogenation reactions while inhibiting sediment formation due to asphaltene precipitation, to allow stable operation.

The combination of the two different catalysts leads to a synergistic effect resulting in a process showing stable operation, high hydrodesulfurisation and conversion activity, and low sediment formation.

The process according to the invention is a method for hydroprocessing a heavy hydrocarbon oil, comprising bringing a heavy hydrocarbon oil in a first stage into contact with hydroprocessing catalyst I in the presence of hydrogen, after which the effluent of the first stage is contacted in whole or in part with hydroprocessing catalyst II in the presence of hydrogen, wherein

- catalyst I comprises 7 to 20 wt.% of a Group VIB metal component, calculated as trioxide on the weight of the catalyst, and 0.5 to 6 wt% of a Group VIII metal component, calculated as oxide on the weight of the catalyst, on a porous inorganic carrier, said catalyst having a specific surface area of at least 100 $m^2$/g, a total pore volume of at least 0.55 ml/g, at least 50% of the total pore volume in pores with a diameter of at least 20 nm (200 Å) and at least 65% of the total pore volume in pores with a diameter of 10-120 nm (100-1200 Å), and
- catalyst II comprises 7 to 20 wt.% of a Group VIB metal component, calculated as trioxide on the weight of the catalyst, and 0.5 to 6 wt.% of a Group VIII metal component, calculated as oxide on the weight of the catalyst, on a porous inorganic carrier, said catalyst having a specific surface area of at least 100 $m^2$/g, a total pore volume of at least 0.55 ml/g, 30-80% of the pore volume in pores with a diameter of 10-20 nm (100-200 Å), and at least 5% of the pore volume in pores with a diameter of at least 100 nm (1000 Å)

with catalyst I having a larger percentage of its pore volume in pores with a diameter of at least 20 nm (200 Å) than catalyst II.

The catalysts used in the process according to the invention comprise catalytic materials on a porous carrier. The catalytic materials present on the catalyst according to the invention comprise a Group VIB metal and a Group VIII metal of the Periodic Table of Elements applied by Chemical Abstract Services (CAS system). The Group VIII metal used in this invention is at least one selected from nickel, cobalt, and iron. In view of performance and economy, cobalt and nickel are preferred. Nickel is especially preferred. As the Group VIB metals which can be used, molybdenum, tungsten, and chromium may be mentioned, but in view of performance and economy, molybdenum is preferred. The combination of molybdenum and nickel is particularly preferred for the catalytic materials of the catalyst according to the invention.

Based on the weight (100 wt.%) of the final catalyst, the amounts of the respective catalytic materials in the catalysts used in the process according to the invention are as follows.

The catalysts comprise 7-20 wt.%, preferably 8-16 wt.%, of Group VIB metal, calculated as trioxide. If less than 7 wt.% is used, the activity of the catalyst is insufficient. On the other hand, if more than 16 wt.%, in particular more than 20 wt. % is used, the catalytic performance is not improved further.

The catalysts comprise 0.5-6 wt.%, preferably 1-5 wt.%, of Group VIII metal, calculated as oxide. If the amount is less than 0.5 wt.%, the activity of the catalysts will be too low. If more than 6 wt.% is present, the catalyst performance will not be improved further.

The total pore volume of Catalyst I and Catalyst II is at least 0.55 ml/g, preferably at least 0.6 ml/g. It is preferred if it is at most 1.0 ml/g, more preferably at most 0.9 ml/g. The determination of the total pore volume and the pore size distribution is effected via mercury penetration at a contact angle of 140° with a surface tension of 480 dynes/cm, using, for example, a mercury porosimeter Autopore II (trade name) produced by Micrometrics.

Catalyst I has a specific surface area of at least 100 m$^2$/g. For the catalyst to meet the required pore size distribution ranges it is preferred for it to have a surface area of 100-180 m$^2$/g, preferably 130-170 m$^2$/g. If the surface area is less than 100 m$^2$/g, the catalytic activity will be too low. In the present specification the surface area is determined in accordance with the BET method based on N$_2$ adsorption.

Catalyst I has at least 50% of the total pore volume in pores with a diameter of at least 20 nm (200 Å), preferably at least 60%. The percentage of pore volume in this range is preferably at most 80%. If the percentage of pore volume in this range is below 50%, the catalytic performance, especially the asphaltene cracking activity, decreases. As a result thereof, sediment formation will increase.

Catalyst I has at least 65% of the total pore volume in pores with a diameter of 10-120 nm (100-1200 Å), preferably at least 75%, more preferably at least 85%. If the percentage of pore volume in this range is insufficient, sediment formation will increase and the residual cracking rate will decrease.

Additionally, it is preferred for Catalyst I to have less than 25% of its pore volume in pores with a diameter of 10 nm (100 Å) or less. If the percentage of pore volume present in this range is above this value, sediment formation may increase due to increased hydrogenation of the non-asphaltenic feed constituents.

Catalyst I is based on a porous inorganic oxide carrier which generally comprises the conventional oxides, e.g., alumina, silica, silica-alumina, alumina with silica-alumina dispersed therein, silica-coated alumina, magnesia, zirconia, boria, and titania, as well as mixtures of these oxides. It is preferred for the carrier to consist for at least 80% of alumina, more preferably at least 90%, still more preferably at least 95%. A carrier consisting essentially of alumina is most preferred, the wording "consisting essentially of" being intended to mean that minor amounts of other components may be present, as long as they do not affect the catalytic activity of the catalyst.

Catalyst II has a surface area of at least 100 m$^2$/g, preferably at least 150 m$^2$/g, more preferably at least 185 m$^2$/g. The surface area is preferably at most 250 m$^2$/g. If the surface area is outside the claimed range, the catalytic performance is insufficient.

Catalyst II has 30-80% of the total pore volume in pores with a diameter of 10-20 nm (100-200 Å), preferably 35-75%, more preferably 40-65%. If less than 30% of the pore volume is present in this range, the catalyst performance is insufficient. If more than 80% of the total pore volume is present in this range, the sediment formation increases.

At least 5% of the total pore volume of Catalyst II is present in pores with a diameter of at least 100 nm (1000 Å), preferably between 8 and 30%, more preferably between 8 and 25%. If less than 5% of the pore volume is present in this range, the asphaltene cracking activity decreases, which leads to increased sediment formation. If the percentage of pore volume present in pores with a diameter of at least 100 nm (1000 Å) is above 25%, particularly above 30%, the sediment formation may increase.

Additionally, it is preferred for Catalyst II to have less than 25% of its pore volume in pores with a diameter of 10 nm (100 Å) or less. If the percentage of pore volume present in this range is above this value, sediment formation may increase due to increased hydrogenation of the non-asphaltenic feed constituents.

Catalyst II preferably has less than 50% of its pore volume present in pores with a diameter of at least 20 nm (200 Å), more preferably less than 40%. If this requirement is met, catalyst II will show particularly good hydrodesulfurisation activity and good hydrogenation activity.

Catalyst II generally has a substantial portion of its surface area present in relatively large pores, that is, pores with a diameter of 15-120 nm (150-1200 Å). Preferably, the catalyst has at least 25 m$^2$/g of surface area in pores within this range (as determined via mercury intrusion), more preferably at least 35m$^2$/g. On the other hand, catalyst II generally has only a limited amount of its surface area in relatively small pores, that is, pores with a diameter of 5-7 nm (50-70 Å). Preferably, the catalyst has less than 40 m$^2$/g of surface area in pores within this range, more preferably less than 20 m$^2$/g. Catalyst II is also based on a porous inorganic oxide carrier which generally comprises the conventional oxides, e.g., alumina, silica, silica-alumina, alumina with silica-alumina dispersed therein, silica-coated alumina, magnesia, zirconia, boria, and titania, as well as mixtures of these oxides. It is preferred for the carrier of catalyst II to comprise at least 3.5 wt.% of silica, calculated on the weight of the final catalyst, preferably 3.5-30 wt.%, more preferably 4-12 wt.%, even more preferably 4.5-10 wt.%. If less than 3.5 wt.% of silica is present, the performance of the catalyst is less pronounced. The balance of the carrier of the Catalyst II is generally be made up of alumina, optionally containing other refractory oxides, such as titania, zirconia, etc. It is preferred that the balance of the carrier of catalyst II is made up of at least 90% of alumina, more preferably at least 95%. It is preferred for the carrier of the catalyst of the invention to consist essentially of silica and alumina, the wording "consists essentially of" being intended to mean that minor amounts of other components may be present, as long as they do not affect the catalytic activity of the catalyst.

In a further preferred embodiment, Catalyst II comprises a Group IA metal component. Sodium and potassium may be mentioned as suitable materials. Sodium is preferred for reasons of performance and economy. The amount of Group IA metal is 0.1-2 wt.%, preferably 0.2-1 wt.%, more preferably 0.1-0.5 wt.%, calculated as oxide on the catalyst. If less than 0.1 wt.% is present, the desired effect will not be obtained. If more than 2 wt.% is present, or sometimes more than 1 wt.%, the activity of the catalyst will be adversely affected.

Catalyst I has a higher percentage of its pore volume present in pores with a diameter of at least 20 nm (200 Å) than catalyst II. If this requirement is not met, the advantageous effects of the present invention will not be obtained. Preferably, the %PV($\geq$ 200 Å) for catalyst I is at least 5% higher than the %PV($\geq$ 200 Å) for catalyst II, more preferably at least 10%, still more preferably at least 20%.

The catalyst particles may have the shapes and dimensions common to the art. Thus, the particles may be spherical, cylindrical, or polylobal and their diameter may range from 0.5 to 10 mm. Particles with a diameter of 0.5-3 mm, preferably 0.7-1.2 mm, for example 0.9-1 mm, and a length of 2-10 mm, for example 2.5-4.5 mm, are preferred. For use in fixed bed operation polylobal particles are preferred, because they lead to a reduced pressure drop in hydrodemetallization operations. Cylindrical particles are preferred for use in ebullating bed operations.

The carrier to be used in the catalysts to be used in the process according to the invention can be prepared by processes known in the art.

A typical production method for a carrier comprising alumina is coprecipitation of sodium aluminate and aluminium sulfate. The resulting gel is dried, extruded, and calcined, to obtain an alumina-containing carrier. Optionally, other components such as silica may be added before, during, or after precipitation.

By way of example, a process for preparing an alumina gel will be described below. At first, a tank containing tap water or warm water is charged with an alkali solution of sodium aluminate, aluminium hydroxide or sodium hydroxide, etc., and an acidic aluminium solution of aluminium sulfate or aluminium nitrate, etc. is added for mixing. The hydrogen ion concentration (pH) of the mixed solution changes with the progression of the reaction. It is preferable that when the addition of the acidic aluminium solution is completed, the pH is 7 to 9, and that during mixing, the temperature is 60 to 75°C. The mixture is then kept at that temperature for, in general, 0.5-1.5 hours, preferably for 40-80 minutes.

By way of a further example, a process for preparing a silica-containing alumina gel is described below. First, an alkali solution such as sodium aluminate, ammonium hydroxide or sodium hydroxide is fed into a tank containing tap water or hot water, an acid solution of an aluminium source, e.g., aluminium sulfate or aluminium nitrate, is added, and the resulting mixture is mixed. The pH of the mixture changes as the reaction progresses. Preferable, after all the acid aluminium compound solution has been added, the pH is 7 to 9. After completion of the mixing an alumina hydrogel can be obtained. Then, an alkali metal silicate such as a water glass or an organic silica solution is added as silica source. To mix the silica source, it can be fed into the tank together with the acid aluminium compound solution or after the aluminium hydrogel has been produced. The silica-containing alumina carrier can, for another example, be produced by combining a silica source such as sodium silicate with an alumina source such as sodium aluminate or aluminium sulfate, or by mixing an alumina gel with a silica gel, followed by moulding, drying, and calcining. The carrier can also be produced by causing alumina to precipitate in the presence of silica in order to form an aggregate mixture of silica and alumina. Examples of such methods are adding a sodium aluminate solution to a silica hydrogel and increasing the pH by the addition of, e.g., sodium hydroxide to precipitate alumina, and coprecipitating sodium silicate with aluminium sulfate. A further possibility is to immerse the alumina carrier, before or after calcination, into an impregnation solution comprising a silicon source dissolved therein.

In a following stage, the gel separated from the solution, and any commercially used washing treatment, for example a washing treatment using tap water or hot water, is carried out to remove impurities, mainly salts, from the gel. Then, the gel is shaped into particles in a manner known in the art, e.g., by way of extrusion, beading or pelletising.

Finally, the shaped particles are dried and calcined. The drying is generally carried out at a temperature between room temperature up to 200°C, generally in the presence of air,. The calcining is generally carried out at a temperature of 300 to 950°C, preferably 600 to 900°C, generally in the presence of air, for a period of 30 minutes to six hours. If so desired, the calcination may be carried out in the presence of steam to influence the crystal growth in the oxide.

By the above production method, it is possible to obtain a carrier having properties which will give a catalyst with the surface area, pore volume, and pore size distribution characteristics specified above. The surface area, pore volume, and pore size distribution characteristics can be adjusted in a manner know to the skilled person, for example by the addition during the mixing or shaping stage of an acid, such as nitric acid, acetic acid or formic acid, or other compounds as moulding auxiliary, or by regulating the water content of the gel by adding or removing water.

The carrier of the catalysts to be used in the process according to the invention have a specific surface area, pore volume, and pore size distribution of the same order as that of the catalysts themselves. The carrier of catalyst I preferably has a surface area of 100-200 m$^2$/g, more preferably 130-170 m$^2$/g. The total pore volume is preferably 0.5-1.2 ml/g, more preferably 0.7-1.0 ml/g. The carrier of catalyst II preferably has a surface area of 180-300 m$^2$/g, more preferably 190-240 m$^2$/g and a pore volume of 0.5-1.0 ml/g, more preferably 0.6-0.9 ml/g.

The Group VIB metal components, Group VIII metal components, and, where appropriate, Group IA metal components, can be incorporated into the catalyst carrier in a conventional manner, e.g., by impregnation and/or by incorporation into the support material before it is shaped into particles. At this point in time it is considered preferred to first prepare the carrier and incorporate the catalytic materials into the carrier after it has been dried and calcined. The metal components can be incorporated into the catalyst composition in the form of suitable precursors, preferably by impregnating the catalyst with an acidic or basic impregnation solution comprising suitable metal precursors. For the Group VIB metals, ammonium heptamolybdate, ammonium dimolybdate, and ammonium tungstenate may be mentioned as suitable precursors. Other compounds, such as oxides, hydroxides, carbonates, nitrates, chlorides, and organic acid salts, may also be used. For the Group VIII metals, suitable precursors include oxides, hydroxides, carbonates, nitrates, chlorides, and organic acid salts. Carbonates and nitrates are particularly suitable. Suitable Group IA metal precursors include nitrates and carbonates. The impregnation solution, if applied, may contain other compounds the use of which is known in the art, such as organic acids, e.g., citric acid, ammonia water, hydrogen peroxide water, gluconic acid, tartaric acid, malic acid or EDTA (ethylenediamine tetraacetic acid). It will be clear to the skilled person that there is a wide range of variations on this method. Thus, it is possible to apply a plurality of impregnating stages, the impregnating solutions to be used containing one or more of the component precursors that are to be deposited, or a portion thereof. Instead of impregnating techniques, dipping methods, spraying methods, etc. can be used. In the case of multiple impregnation, dipping, etc., drying and/or calcining may be carried out in between.

After the metals have been incorporated into the catalyst composition, it is optionally dried, e.g., in air flow for about 0.5 to 16 hours at a temperature between room temperature and 200°C, and subsequently calcined, generally in air, for about 1 to 6 hours, preferably 1-3 hours at 200-800°C, preferably 450-600°C. The drying is done to physically remove the deposited water. The calcining is done to bring at least part, preferably all, of the metal component precursors to the oxide form.

It may be desirable to convert the catalyst, i.e., the Group VIB and Group VIII metal components present therein, into the sulfidic form prior to its use in the hydroprocessing of hydrocarbon feedstocks. This can be done in an otherwise conventional manner, e.g., by contacting the catalyst in the reactor at increasing temperature with hydrogen and a sulfur-containing feedstock, or with a mixture of hydrogen and hydrogen sulfide. *Ex situ* presulfiding is also possible.

The process of the present invention is particularly suitable for the hydroprocessing of heavy hydrocarbon feeds. It is particularly suitable for hydroprocessing of heavy feedstocks of which at least 50 wt.% boils above 538°C (1000°F) and which comprise at least 2 wt.% of sulfur and at least 5 wt.% of Conradson carbon. The sulfur content of the feedstock may be above 3 wt.%. Its Conradson carbon content may be above 8 wt.%. The feedstock may contain contaminant metals, such as nickel and vanadium. Typically, these metals are present in an amount of at least 20 wtppm, calculated on the total of Ni and V, more particularly in an amount of at least 30 wtppm.

Suitable feedstocks include atmospheric residue, vacuum residue, residues blended with gas oils, particularly vacuum gas oils, crudes, shale oils, tar sand oils, solvent deasphalted oil, coal liquefied oil, etc. Typically they are atmospheric residue (AR), vacuum residue (VR), and mixtures thereof.

Each stage of the process according to the invention can be carried out in a fixed bed, in a moving bed, or in an ebullated bed. It is preferred to carry out at least one stage in an ebullating bed. Carrying out both stages in an ebullating bed is preferred.

The two stages of the process according to the invention can be carried out in a single reactor, or in separate reactors. If the process is in an ebullating bed process, the use of separate reactors for the two stages is preferred. If so desired one may perform one or more of intermediate phase separation, stripping, H$_2$ quenching, etc. between the two stages. The process conditions for the process according to the invention may be as follows. The temperature generally is 350-450°C, preferably 400-440°C. The pressure generally is 5-25 MPA, preferably 14-19 MPA. The liquid hourly space velocity generally is 0.1-3 h-1, preferably 0.3-2 h-1. The hydrogen to feed ratio generally is 300-1,500 NI/I, preferably 600-1000 NI/I. The process is carried out in the liquid phase.

The invention will be elucidated below by way of the following examples, though it must not be deemed limited thereto or thereby.

Example 1

Preparation of Catalyst A

A sodium aluminate solution and an aluminium sulfate solution were simultaneously added dropwise to a tank containing tap water, mixed at pH 8.5 at 65°C, and held for 70 minutes. The thus produced alumina hydrate gel was separated from the solution and washed with warm water, to remove the impurities in the gel. Then, the gel was kneaded for about 20 minutes and extruded as cylindrical particles having a diameter of 0.9 to 1 mm and a length of 3.5 mm. The extruded alumina particles were dried at 120°C for 16 hours and calcined at 900°C for 2 hours, to obtain an alumina carrier.

100 g of the alumina carrier obtained as described above were immersed in 100 ml of a citric acid solution containing 16.4 g of ammonium molybdate tetrahydrate and 9.8 g of nickel nitrate hexahydrate at 25°C for 45 minutes, to obtain a carrier loaded with metallic components.

Subsequently the loaded carrier was dried at 120°C for 30 minutes and calcined at 540°C for 1.5 hours, to complete a catalyst. The amounts of the respective components in the produced catalyst and the properties of the catalyst are shown in Table 1. Catalyst A meets the requirements of Catalyst I of the present invention.

Preparation of Catalyst B

To produce a silica-alumina carrier, a sodium aluminate solution was supplied to a tank containing tap water, and an aluminium sulfate solution was added and mixed. When the addition of the aluminium sulfate solution was completed, the mixture had a pH of 8.5. The mixture was kept at 64°C for 1.5 hours. Then, a sodium silicate solution was added and mixed. By such mixing a silica-alumina gel was produced. The sodium silicate concentration was set at 1.6 wt.% of the alumina gel solution.

The silica-alumina gel was isolated by filtration and washed with hot water to remove impurities from the gel. It was then extruded into cylindrical grains with a diameter of 0.9-1 mm and a length of 3.5 mm. The resulting particles were dried in air at a temperature of 120°C for 16 hours and subsequently calcined in the presence of air for two hours at 800°C to obtain a silica-alumina carrier. The silica-content of the obtained carrier was 7 wt.%.

One hundred grams of the thus obtained silica-alumina carrier were impregnated with 100 ml of an impregnation solution containing 13.4 g of ammonium molybdate tetrahydrate, 11.2 g of nickel nitrate hexahydrate, 0.68 g of sodium nitrate, and 50 ml of 25% ammonia water. The impregnated carrier was then dried at a temperature of 120°C for 30 minutes and calcined in a kiln for 1.5 hours at 540°C to produce a final catalyst. The composition and properties of this catalyst are given in Table 1. Catalyst B meets the requirements of Catalyst II of the present invention.

table 1

|  | Catalyst A | Catalyst B |
|---|---|---|
| carrier | alumina | $Al_2O_3$ + 6% $SiO_2$ |
| Group VIB wt.% ox | 11.9 | 11.5 |
| Group VIII wt.% ox | 2.0 | 2.1 |
| Group IA wt.% ox | 0 | 0.26 |
| surface area $m^2$/g | 147 | 214 |
| total pore volume ml/g | 0.79 | 0.75 |
| %PV(≥200 Å) | 74 | 22.6 |
| %PV(100-200 Å) | 25 | 64 |
| %PV(100-1200 Å) | 89 | 75 |
| %PV(≥ 1000 Å) | 11 | 10 |
| %PV(≤ 100 Å) | 0.4 | 12 |

Catalysts A and B were tested in various combinations in the two-stage hydroprocessing of a heavy hydrocarbon feedstock. The feedstock used in these examples was a Middle East petroleum consisting of 90 wt.% of vacuum residue (VR) and 10 wt.% of atmospheric residue (AR). The composition and properties of the feed are given in Table 1.

Table 2: Feedstock composition

| Middle East petroleum (VR:AR = 50:50) | |
|---|---|
| Sulfur (wt.%) | 4.79 |
| Nitrogen (wppm) | 2 890 |
| Metals - vanadium (wppm) | 85 |
| Metals - nickel (wppm) | 26 |
| Conradson Carbon residue (wt.%) | 16.2 |
| C7- insolubles' (wt.%) | 6.0 |
| Vacuum residue[2] (wt.%) | 75 |

(continued)

| Middle East petroleum (VR:AR = 50:50) | |
|---|---|
| Density (g/ml at 15°C) | 1.0048 |

[1] Matter insoluble in n-heptane
[2] Fraction boiling above 538°C in accordance with ASTM D 5307 (distillation gas chromatography)

Catalysts A and B were packed into a fixed bed reactor in two catalyst beds in the combinations given in Table 3 below. The two catalyst beds contained equal volume amounts of catalyst.

The feedstock was introduced into the unit in the liquid phase at a liquid hourly space velocity of 1.5 h-1, a pressure of 16.0 MPa, an average temperature of 427°C, with the ratio of supplied hydrogen to feedstock ($H_2$/oil) being kept at 800 Nl/l.

The oil product produced by this process was collected and analysed to calculate the amounts of sulfur (S), metals (vanadium + nickel) (M), and asphaltene (Asp) removed by the process, as well as the 538°C+fraction. The relative volume activity values were obtained from the following formulae.

$$RVA = 100 * k \text{ (tested catalyst combination)}/ k \text{ (comparative catalyst combination 1)}$$

wherein for HDS

$$k = (LHSV/(0.7)) * (1/y^{0.7} - 1/x^{0.7})$$

and for HDM and asphaltene removal

$$k = LHSV * \ln (x/y)$$

with x being the content of S, M, or Asp in the feedstock, and y being the content of S, M, or Asp in the product.

The cracking rate, also indicated as vacuum residu cracking rate, is the conversion of the fraction boiling above 538°C into product boiling below 538°C.

| | C. 1 | C.C. 1 | C.C. 2 | C.C. 3 |
|---|---|---|---|---|
| Catalyst I | A | A | B | B |
| Catalyst II | B | A | B | A |
| HDS | 115 | 100 | 126 | 116 |
| HDM | 112 | 100 | 76 | 85 |
| Asphaltene removal | 107 | 100 | 81 | 82 |
| VR cracking rate | 41 | 41 | 42 | 41 |
| Sediment[1] | 0.04 | 0.02 | 0.29 | 0.25 |

[1]Sediment determined in accordance with the IP 375 method of the English Institute of Petroleum

From the above table it can be seen that, as compared with the comparative catalyst combinations, the catalyst system according to the invention combines good hydrodesulfurisation, hydrodemetallisation, and asphaltene removal with a high cracking rate and low sediment formation.

**Claims**

1. A method for hydroprocessing a heavy hydrocarbon oil, comprising bringing a heavy hydrocarbon oil in a first stage into contact with hydroprocessing catalyst I in the presence of hydrogen, after which the effluent of the first stage is contacted in whole or in part with hydroprocessing catalyst II in the presence of hydrogen, wherein catalyst I comprises 7 to 20 wt.% of a Group VIB metal component, calculated as trioxide on the weight of the catalyst, and 0.5 to 6 wt.% of a Group VIII metal component, calculated as oxide on the weight of the catalyst, on a porous inorganic carrier, said catalyst having a specific surface area of at least 100 m$^2$/g, a total pore volume of at least 0.55 ml/g, at least 50% of the total pore volume in pores with a diameter of at least 20 nm (200 Å) and at least 65% of the total pore volume in pores with a diameter of 10-120 nm (100-1200 A), and catalyst II comprises 7 to 20 wt.% of a Group VIB metal component, calculated as trioxide on the weight of the catalyst, and 0.5 to 6 wt.% of a Group VIII metal component, calculated as oxide on the weight of the catalyst, on a porous inorganic carrier, said catalyst having a specific surface area of at least 100 m$^2$/g, a total pore volume of at least 0.55 ml/g, 30-80% of the pore volume in pores with a diameter of 10-20 nm (100-200 Å), and at least 5% of the pore volume in pores with a diameter of at least 100 nm (1000 Å) with catalyst I having a larger percentage of its pore volume in pores with a diameter of at least 20 nm (200 Å) than catalyst II.

2. The method of claim 1 wherein catalyst I has less than 25% of its pore volume in pores with a diameter of less than 10 nm (100 Å).

3. The method of claim 1 or 2 wherein the carrier of catalyst I consists essentially of alumina.

4. The method of any one of the preceding claims wherein catalyst II has less than 50% of its pore volume in pores with a diameter of at least 20 nm (200 A).

5. The method of any one of the preceding claims wherein the carrier of catalyst II consists essentially of alumina and at least 3.5 wt.% of silica.

6. The method of any one of the preceding claims wherein catalyst II comprises 0.1-2 wt.% of a Group IA metal component.

7. The method of any one of the preceding claims wherein the heavy hydrocarbon feed is a feed of which at least 50 wL% boils above 538°C (1000°F) and which comprises at least 2 wt.% of sulfur and at least 5 wt.% of Conradson carbon.

8. The method of any one of the preceding claims wherein at least one of the stages is carried out in an ebullating bed.

**Patentansprüche**

1. Verfahren zum Hydroprocessing eines schweren Kohlenwasserstofföls, umfassend das In-Kontakt-Bringen eines schweren Kohlenwasserstofföls in einer ersten Stufe mit einem Hydroprocessing-Katalysator I in Gegenwart von Wasserstoff, wonach die abfließende Flüssigkeit der ersten Stufe vollständig oder teilweise mit einem Hydroprocessing-Katalysator II in Gegenwart von Wasserstoff in Kontakt gebracht wird, wobei Katalysator I 7 bis 20 Gew.-% einer Komponente eines Metalls der Gruppe VIB, berechnet als Trioxid, bezogen auf das Gewicht des Katalysators, und 0,5 bis 6 Gew.-% einer Komponente eines Metalls der Gruppe VIII, berechnet als Oxid, bezogen auf das Gewicht des Katalysators, auf einem porösen anorganischen Träger umfasst, wobei der Katalysator eine spezifische Oberfläche von wenigstens 100 m$^2$/g, ein Gesamt-Porenvolumen von wenigstens 0,55 ml/g hat, wobei wenigstens 50 % des Gesamt-Porenvolumens in Poren mit einem Durchmesser von wenigstens 20 nm (200 Å) und wenigstens 65 % des Gesamt-Porenvolumens in Poren mit einem Durchmesser von 10 - 120 nm (100 - 1200 Å) vorliegen, und Katalysator II 7 bis 20 Gew.-% einer Komponente eines Metalls der Gruppe VIB, berechnet als Trioxid, bezogen auf das Gewicht des Katalysators, und 0,5 bis 6 Gew.-% einer Komponente eines Metalls der Gruppe VIII, berechnet als Oxid, bezogen auf das Gewicht des Katalysators, auf einem porösen, anorganischen Träger umfasst, wobei der Katalysator eine spezifische Oberfläche von wenigstens 100 m$^2$/g, ein Gesamt-Porenvolumen von wenigstens 0,55 ml/g hat, wobei 30 - 80 % des Porenvolumens in Poren mit einem Durchmesser von 10 - 20 nm (100 - 200 Å) vorliegen und wenigstens 5 % des Porenvolumens in Poren mit einem Durchmesser von wenigstens 100 nm (1000 Å) vorliegen,

wobei bei Katalysator I ein größerer Prozentsatz des Porenvolumens in Poren mit einem Durchmesser von wenigstens 20 nm (200 Å) als bei Katalysator II vorliegt.

2. Verfahren nach Anspruch 1, wobei weniger als 25 % des Porenvolumens von Katalysator I in Poren mit einem Durchmesser von weniger als 10 nm (100 Å) vorliegen.

3. Verfahren nach Anspruch 1 oder 2, wobei der Träger von Katalysator I im Wesentlichen aus Aluminiumoxid besteht.

4. Verfahren nach einem der vorhergehenden Ansprüche, wobei weniger als 50 % des Porenvolumens von Katalysator II in Poren mit einem Durchmesser von wenigstens 20 nm (200 Å) vorliegen.

5. Verfahren nach einem der vorhergehenden Ansprüche, wobei der Träger von Katalysator II im Wesentlichen aus Aluminiumoxid und wenigstens 3,5 Gew.-% Siliciumdioxid besteht.

6. Verfahren nach einem der vorhergehenden Ansprüche, wobei Katalysator II 0,1 bis 2 Gew.-% einer Komponente eines Metalls der Gruppe IA umfasst.

7. Verfahren nach einem der vorhergehenden Ansprüche, wobei das schwere Kohlenwasserstoff-Einsatzmaterial ein Einsatzmaterial ist, von dem wenigstens 50 Gew.-% oberhalb von 538 °C (1000 °F) sieden und das wenigstens 2 Gew.-% Schwefel und wenigstens 5 Gew.-% Conradson-Kohlenstoff umfasst.

8. Verfahren nach einem der vorhergehenden Ansprüche, wobei wenigstens eine der Stufen in einem Wirbelbett durchgeführt wird.

**Revendications**

1. Procédé d'hydrocraquage d'un hydrocarbure liquide lourd, comprenant, lors d'une première étape, la mise en contact d'un hydrocarbure liquide lourd avec un catalyseur d'hydrocraquage I en présence d'hydrogène, après quoi l'effluent de la première étape est mis en contact en totalité ou en partie avec un catalyseur d'hydrocraquage II en présence d'hydrogène, dans lequel

le catalyseur I comprend 7 à 20 % en poids d'un composant métallique du groupe VIB, calculé en tant que trioxyde sur le poids du catalyseur, et 0,5 à 6 % en poids d'un composant métallique du groupe VIII, calculé en tant qu'oxyde sur le poids du catalyseur, sur un support inorganique poreux, ledit catalyseur ayant une surface spécifique d'au moins 100 m$^2$/g, un volume de pores total d'au moins 0,55 ml/g, au moins 50 % du volume de pores total en pores d'un diamètre d'au moins 20 nm (200 Å) et au moins 65 % du volume de pores total en pores d'un diamètre de 10 à 120 nm (100 à 1 200 Å), et

le catalyseur II comprend 7 à 20 % en poids d'un composant métallique du groupe VIB, calculé en tant que trioxyde sur le poids du catalyseur, et 0,5 à 6 % en poids d'un composant métallique du groupe VIII, calculé en tant qu'oxyde sur le poids du catalyseur, sur un support inorganique poreux, ledit catalyseur ayant une surface spécifique d'au moins 100 m$^2$/g, un volume de pores total d'au moins 0,55 ml/g, 30 à 80 % du volume de pores en pores d'un diamètre de 10 à 20 nm (100 à 200 Å), et au moins 5 % du volume de pores en pores d'un diamètre d'au moins 100 nm (1 000 Å)

le catalyseur I ayant un pourcentage supérieur de son volume de pores en pores d'un diamètre d'au moins 20 nm (200 Å) au catalyseur II.

2. Procédé selon la revendication 1, dans lequel le catalyseur I a moins de 25 % de son volume de pores en pores d'un diamètre de moins de 10 nm (100 Å).

3. Procédé selon la revendication 1 ou 2, dans lequel le support du catalyseur I est essentiellement constitué d'alumine.

4. Procédé selon l'une quelconque des revendications précédentes, dans lequel le catalyseur II a moins de 50 % de son volume de pores en pores d'un diamètre d'au moins 20 nm (200 Å).

**5.** Procédé selon l'une quelconque des revendications précédentes, dans lequel le support du catalyseur II est essentiellement constitué d'alumine et d'au moins 3,5 % en poids de silice.

**6.** Procédé selon l'une quelconque des revendications précédentes, dans lequel le catalyseur II comprend de 0,1 à 2 % en poids d'un composant métallique du groupe IA.

**7.** Procédé selon l'une quelconque des revendications précédentes, dans lequel l'alimentation d'hydrocarbure lourd est une alimentation dont au moins 50 % en poids bout au-dessus de 538 °C (1 000 °F) et qui comprend au moins 2 % en poids de soufre et au moins 5 % en poids de carbone de Conradson.

**8.** Procédé selon l'une quelconque des revendications précédentes, dans lequel au moins l'une des étapes s'effectue dans un lit d'ébullition.